# EUROPÄISCHE PATENTSCHRIFT

(11) **EP 0 332 959 B1**
(45) Veröffentlichungstag und Bekanntmachung des Hinweises auf die Patenterteilung: **08.06.1994**
(21) Anmeldenummer: 89103846.5
(22) Anmeldetag: 04.03.1989
(51) Int. Cl.: G02B 27/22, G09F 19/12

(54) **Stereoskopisches Display-System**
Stereoscopic display system
Système d'affichage stéréoscopique

(30) Priorität: 17.03.1988 DE 3808988
(43) Veröffentlichungstag der Anmeldung: 20.09.1989
(73) Patentinhaber: Bayerische Motoren Werke Aktiengesellschaft, 80788 München (DE)
(72) Erfinder: Jost, Michael, D-8044 Unterschleissheim (DE)

(56) Entgegenhaltungen:
- EP-A- 0 185 419
- WO-A-88/08146
- FR-A- 1 407 269

## Beschreibung

Die Erfindung bezieht sich auf ein stereoskopisches Display-System, das üblicherweise die im Oberbegriff des Patentanspruchs 1 angegebenen Merkmals aufweist.

Unter stereoskopischen Darstellungen sind solche zu verstehen, die der Betrachter als scheinbar dreidimensional wahrnimmt. Anwendungen derartiger Systeme finden sich bei Luft, Land oder Seefahrzeugen sowie deren Simulatoren, ferner bei computergestützen Anzeigesystemen sowie in Spielen und in Werbung. Ein besonders wichtiger Anwendungsfall liegt bei Kraftfahrzeugen vor. Dabei dienen derartige Systeme dazu Informationen in variablem Abstand vor dem Kraftfahrzeug darzustellen.

Bei derartigen Darstellungen besteht ein grundlegendes Problem. Da es häufig gewünscht ist, die Darstellung (scheinbar), d.h. als virtuelles Bild, in möglichst großer Entfernung dazustellen, ergibt sich am Ort des Betrachters in der Regel eine Überlagerung der beiden virtuellen Bilder der Displays. Diese Überlagerung findet in jedem Auge statt und führt dazu, daß der stereoskopische Eindruck verringert oder aufgehoben wird. Diese Aussage gilt zumindest dann, wenn keine besonderen Maßnahmen ergriffen werden, die beiden virtuellen Bilder der Bildflächen auseinander zu halten. Derartige Vorkehrungen sind jedoch in der Regel besonders aufwendig und gerade für den Anwendungsfall bei Kraftfahrzeugen aufgrund der räumlich beengten Einbauverhältnisse nur schwer oder überhaupt nicht mit vertretbarem Aufwand realisierbar. Die Aussage, das virtuelle Bild in großer Entfernung zu erzeugen, bedeutet für Kraftfahrzeuge beispielsweise eine Entfernung von einigen Metern vor dem Kraftfahrzeug und reicht bis zu einer Entfernung, die beispielsweise durch den jeweiligen Sicherheitsabstand definiert ist. Dieser ist wiederum abhängig vom Quadrat der Fahrzeuggeschwindigkeit.

Es ist daher Aufgabe der Erfindung, ein stereoskopisches Display-System zu schaffen, das mit geringem konstruktiven Aufwand den stereoskopischen Eindruck möglichst uneingeschränkt zur Wirkung kommen läßt.

Die Erfindung löst diese Aufgabe durch die Merkmale, die im kennzeichnenden Teil des Patentanspruchs 1 angegeben sind.

Grundlegend für die Erfindung ist die Überlagerung des reellen Bildes eines der beiden Blendenelemente mit gerade dem virtuellen Bild der Bildfläche, das nicht in das Auge des Betrachters gelangen soll. Das reelle Bild des Blendenelements löscht sozusagen dieses "störende" virtuelle Bild aus. In das Auge des Betrachters gelangt somit lediglich das virtuelle Bild der gewünschten Bildfläche. Da für die beiden Augen des Betrachters jeweils verschiedene virtuelle Bilder der Bildflächen aufgehoben werden, sind die beiden wirksamen virtuellen Bilder ebenfalls voneinander verschieden. Damit aber erscheint dem Betrachter die Darstellung uneingeschränkt dreidimensional, da er in beiden Augen verschiedene (virtuelle) Bilder von verschiedenen Bildflächen empfängt. Wie an sich bekannt, kann der plastische Eindruck durch Querdisparation der beiden Bildflächen verändert werden. Dabei kann die tatsächliche Bildweite konstant bleiben. Die Bildweite sollte jedoch mindestens 3 m betragen, da ab dieser Entfernung das Auge auf Unendlich akkommodiert ist.

Die Realisierung der Erfindung ist auf verschiedene Weise möglich. So kann die Austrittsoptik eine einzige Sammellinse enthalten. Sie kann aber auch aus zwei den Bildflächen individuell zugeordneten Sammellinsen bestehen. Unter Sammellinsen sind nicht nur einfache, sondern auch zusammengesetzte Linsen mit Sammellinsencharakter zu verstehen.

Die Bildflächen ihrerseits können auf verschiedene Weise dargestellt sein. Es kann sich einerseits um reelle Zwischenbilder von Bildern (Gegenständen) handeln, die vor der - bezogen auf den Betrachter - jenseitigen Brennebene der Austrittsoptik liegen und mittels einer Vorschaltoptik abgebildet sind. Die Vorschaltoptik ihrerseits kann wiederum aus einer oder zwei individuell den beiden Bildern zugeordneten Linsen bzw. Linsensystemen bestehen.

Andererseits können die Bildflächen auch durch einen kombinierten oder zwei voneinander unabhängige Lichtventilkörper gebildet sein, dem bzw. denen eine vor der jenseitigen Brennebene der Austrittsoptik gelegene Leuchtfläche zugeordnet ist. Der Lichtventilkörper kann vorzugsweise eine LCD-Matrix sein, die für die positiven Bildflächenpunkte durchlässig ist. Mit Hilfe eines derartigen Lichtventilkörpers tritt ein Wahrnehmungsphänomen auf. Die Anordnung des Lichtventilkörpers in oder innerhalb in der Nähe der Brennweite der Austrittsoptik (Kollimatoroptik) führt dazu, daß das mit Hilfe des Lichtventilkörpers gebildete bzw. modellierte Bild bzw. die beiden Bildinhalte der Bildflächen scheinbar in großer Entfernung liegen. Die Folge davon ist, daß die Augen des Betrachters auf große Entfernung bzw. Unendlich akkommudiert sind, was für das Auge einen entspannten Zustand bedeutet.

Andererseits empfängt der Betrachter aber das Bild der Leuchtfläche, das wiederum in relativ geringer Entfernung liegt. Dieses reelle Bild wird zusätzlich überlagert von den reellen Bildern der beiden Blendenelemente mit dem obenbeschriebenen Effekt der Auslöschung je eines virtuellen Bildes durch die Überlagerung dieses Bildes mit dem reellen Bild je eines Blendenelements. Im Ergebnis führt dies dazu, daß der Betrachter die stereoskopische, aus den beiden Bildflächen zusammengesetzte Information in großer bzw. unendlicher Entfernung liegend wahrnimmt. Die Bildweite kann scheinbar durch verändern der Querdisparation ergänzend oder alternativ zum Verschieben des Lichtventilkörpers innerhalb der Brennweite der Austrittsoptik eingestellt werden.

Eine konstruktive Vereinfachung ergibt sich für das zuletzt beschriebene System bei einstückiger Gestaltung der Leuchtfläche und der Blendenelemente.

Der Vorteil der zuletzt beschriebenen zweiten Ausführungsform des Systems (mit Lichtventilkörpern) gegenüber dem ersten Ausführungsbeispiel liegt in der deutlich verringerten Bautiefe, die im wesentlichen lediglich durch die jenseitige Brennweite der Austrittsoptik und den Abstand des Leuchtkörpers von dieser Brennweite bestimmt ist. Dieser Abstand kann relativ gering gehalten werden und ermöglicht es, die aufgeführten optischen Elemente (Blendenelemente, Leuchtkörper und Austrittsoptik) innerhalb des Armaturenbretts eines Kraftfahrzeugs unterzubringen.

In der Zeichnung sind Ausführungsbeispiele der Erfindung dargestellt. Es zeigt
- Fig. 1: schematisch den Aufbau eines ersten Ausführungsbeispiels und
- Fig. 2: schematisch den Aufbau eines zweiten Ausführungsbeispiels der Erfindung.

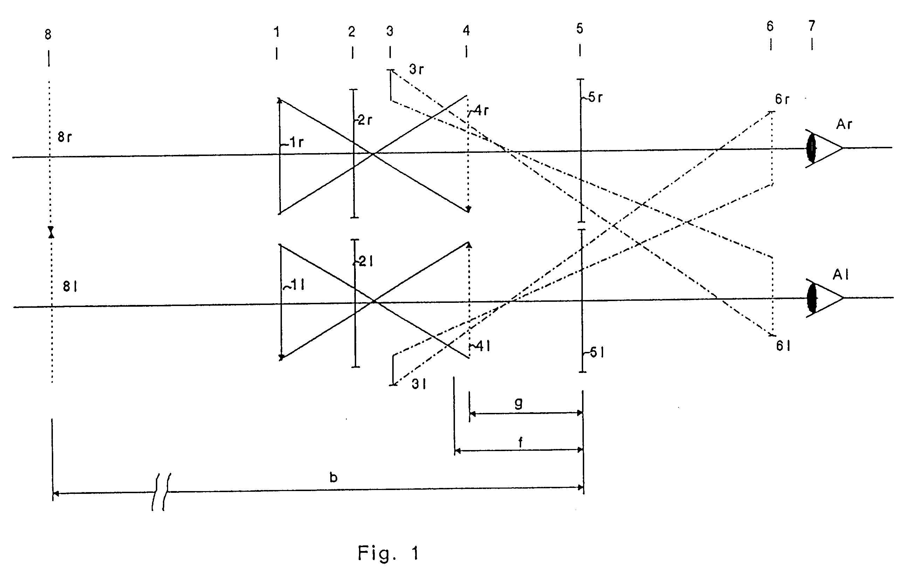

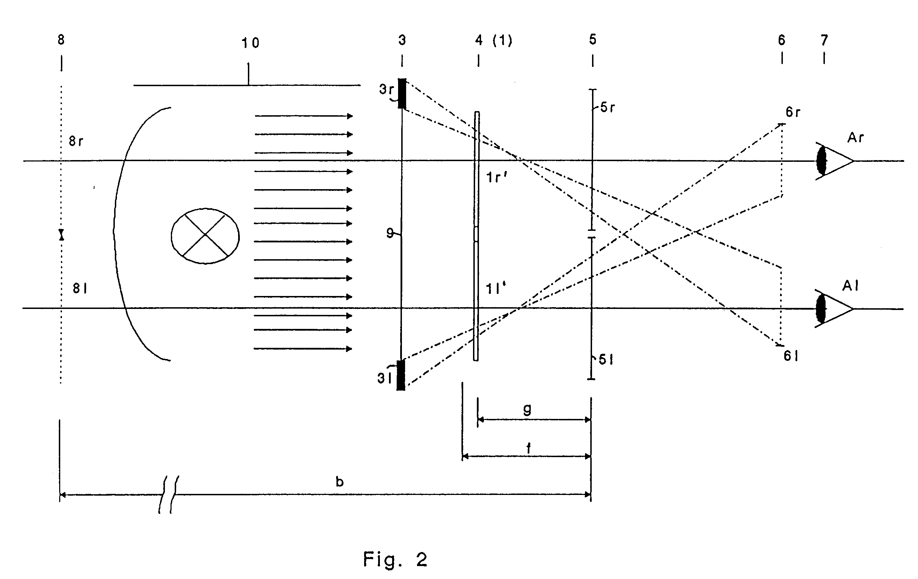

Die Ausführungsbeispiele von Fig. 1 und 2 dienen dazu, dem Betrachter einen stereoskopischen Bildeindruck zu vermitteln. Der Betrachter befindet sich mit seinen beiden Augen Aᵣ und Aₗ am Ende von verschiedenen Strahlengängen.

Bei Fig. 1 gehen die Strahlengänge von verschiedenen optischen Elementen aus. Dabei handelt es sich um zwei Bildflächen 1r und 1l, die zwei Bilder enthalten und deren Überlagerung im Gehirn des Betrachters den stereoskopischen Bildeindruck vermittelt. Dabei soll erreicht werden, daß die in der Bildfläche 1r enthaltene Bildinformation nur in das Auge Aᵣ und die Bildinformation der Bildfläche 1l nur in das Auge Aₗ gelangt. Diese Bildinformation soll ihrerseits in großer Entfernung vor dem Betrachter liegend erscheinen, um diesem eine möglichst akkommodationsfreie Betrachtung zu ermöglichen. Dadurch wird es möglich, eine Bildinformation dem Betrachter zu vermitteln, wenn dieser sich in einem Kraftfahrzeug befindet und seinen Blick auf das Verkehrsgeschehen richtet. Zum Aufnehmen der Bildinformation ist es dann nicht mehr erforderlich, den Blick vom Verkehrsgeschehen abzuwenden. Vielmehr erhält der Fahrzeugbenutzer die Bildinformation in Überlagerung mit dem Verkehrgeschehen.

Die Darstellung der Bildinformation in relativ großer Entfernung vor dem Fahrzeugbenutzer wird erreicht durch eine virtuelle Abbildung der in den Bildflächen 1r und 1l enthaltenen Bildinformation mit Hilfe einer Austrittsoptik, die aus zwei Sammellinsen 2r und 2l besteht. Diese erzeugen ein reelles Zwischenbild 4r und 4l, das lediglich seitenverkehrt ist. Voraussetzung hierfür ist, daß sich die Bildflächen 1r und 1l außerhalb der - bezüglich des Betrachters - jenseitigen Brennweite der Sammellinsen 2r und 2l befindet.

Die reellen Zwischenbilder 4r und 4l werden mit Hilfe einer Kollimatorlinse 5 als virtuelles, d.h. in einer scheinbaren größeren Entfernung liegendes Bild für den Betrachter abgebildet. Dies wird erreicht, in dem die Lage der Zwischenbilder 4r und 4l etwa in der Brennweite der Kollimatorlinse 5 gelegt sind. Die Lage der Brennebene der Kollimatorlinse 5 ist durch die Brennweite f angedeutet. Das virtuelle Bild der Zwischenbilder 4r und 4l befinden sich in einer Ebene 8 und besitzt eine Bildweite b, die deutlich größer als die Brennweite f bzw. die Gegenstandsweite g ist.

Das Problem einer derartigen stereoskopischen virtuellen Abbildung besteht darin, daß die Zwischenbilder 4r und 4l und damit die Bildflächen 1r und 1l nicht nur in den Augen Aᵣ und Aₗ der "richtigen" Seite - d.h., das Bild 4r nur im Auge Aᵣ bzw. das Bild 4l im Auge Aₗ -abgebildet werden, sondern aufgrund der Eigenschaften der virtuellen Abbildung auch in den jeweils anderen Augen (Übersprechen). Damit aber käme es in beiden Augen zu einer überlagerung der beiden virtuellen Bilder der Bildflächen 1r und 1l und damit zu einer Beeinträchtigung bzw. Aufhebung des gewünschten stereoskopischen Bildeindrucks.

Um dies zu vermeiden, ist zusätzlich außerhalb der - bezogen auf den Betrachter - jenseitigen Brennweite der Kollimatorlinse 5 eine aus zwei Blendenelementen 3r und 3l bestehende Aperturblende in einer Ebene 3 angeordnet, die ebenfalls mit Hilfe der Kollimatorlinse 5 abgebildet werden. Diese Abbildung erfolgt in Form eines reellen Bildes und soll in der durch die Augen Aᵣ und Aₗ des Betrachters bestimmten Ebene erfolgen. Dies wird durch eine entsprechende Wahl der Lage der Ebene 3 inbezug auf die optischen Abbildungseigenschaften der Kollimatorlinsen 5 erreicht. Diese Lage und Abbildung der Linsenelemente 3r und 3l soll dabei so gewählt sein, daß das Blendenelement 3r im Auge Aₗ, das Blendenelement 3l im Auge Aᵣ reell abgebildet wird.

In den Augen Aᵣ und Aₗ kommt es nun jeweils zur Überlagerung zweier virtueller Bilder der Bildflächen 1r und 1l sowie eines reellen Bildes eines Blendenelements. Dabei sorgt, wie durch den von den Blendenelementen 3r und 3l ausgehenden Strahlengang angedeutet das reelle Bild des Blendenelements 3r dafür, daß das virtuelle Bild der Bildfläche 1r im Auge Aₗ überlagert und damit eliminiert wird. Dasselbe gilt für das Auge Aᵣ, in dem es zu einer Überlagerung des reellen Bildes des Blendenelements 3l und des virtuellen Bildes der Bildfläche 1l kommt. Somit empfangen die beiden Augen Aᵣ und Aₗ jeweils nur das wirksame - virtuelle - Bild der Bildflächen 1r bzw. 1l. Das Übersprechen der unerwünschten Bildinformation der Bildfläche 1r für das Auge Aₗ und der Bildfläche 1l für das Auge Aᵣ wird damit ausgeschlossen. Damit aber ist der stereoskopische Eindruck, der durch die beiden Bildflächen 1r und 1l hervorgerufen wird und durch Überlagerung der mit den Augen Aᵣ und Aₗ aufgenommenen - virtuellen - Bilder der Bildflächen 1r und 1l hervorgerufen wird, vollständig gegeben. Er läßt sich durch entsprechende seitliche Disparation der Bildflächen 1r und 1l im gewünschten Maße einstellen.

Beim Ausführungsbeispiel von Fig. 2 sind Teile gleicher Funktion mit gleichen Bezugszeichen wie in Fig. 1 bezeichnet. Im Unterschied zu Fig. 1 wird die Bildinformation mit Hilfe von zwei Bildflächen 1r' und 1l' als moduliertes Bild einer Leuchtfläche 9 erzeugt. Dabei sind die Bildflächen 1r' und 1l' als Lichtventil mit Hilfe einer LCD-Folie bzw. LCD-Matrix erzeugt, die für die gewünschten positiven, d.h. hell erscheinenden Bildpunkte durchlässig für die negativen, d.h. dunkel erscheinenden Bildpunkte lichtundurchlässig geschaltet ist. Die Leuchtfläche 9 ist als reiner Diffusor ausgebildet. Dabei handelt es sich in der Regel um einen Leuchtschirm, der durch eine Lichtquelle 10 bestrahlt ist, oder selbst als Leuchtfläche, z.B. als Elektrolumineszenzfolie ausgebildet ist.

Die Anordnung der Bildflächen 1r' und 1l' ist etwa in der Brennebene der Kollimatorlinse 5. Daraus ergibt sich, daß die Entfernungseinstellung der Augen Aᵣ und Aₗ durch die - scheinbare - Entfernung der Ebene 4' geprägt ist, in der sich die Bildflächen 1r' und 1l' befinden. Da die Ebene 4' in etwa mit der Brennebene der Kollimatorlinse 5 zusammenfällt, liegt diese Ebene 4' scheinbar im unendlichen bzw. bei entsprechender Lage der Ebene 4' etwas außerhalb der Brennebene der Kollimatorlinse 5 in großer endlicher Entfernung.

Mit dieser durch die scheinbare sehr große Entfernung der Bildflächen 1r' und 1l' geprägten Einstellung der Augen Aᵣ und Aₗ, d.h. praktisch akkommodationsfreien Einstellung dieser Augen, wird eine Bildinformation wahrgenommen, die durch das Zusammenspiel der Bildflächen 1r' und 1l' und des Leuchtschirms 9 hervorgerufen wird. Der Leuchtschirm 9 befindet sich wiederum zwar außerhalb der jenseitigen Brennebene der Kollimatorlinse 5, jedoch in relativ kurzem Abstand hinter dieser Brennebene.

Das gewünschte Eliminieren der durch die Bildflächen 1r' bzw. 1l' mit bestimmten Bildinformationen in den Augen Aₗ bzw. Aᵣ des Betrachters - bedingt durch die virtuelle Abbildung der Bildflächen 1r' und 1l' - wird wie beim Ausführungsbeispiel von Fig. 1 durch eine reelle Abbildung von Blendenelementen 3r und 3l in den gewünschten Augen Aₗ für das reelle Bild des Blendenelements 3r und Aᵣ für das reelle Bild des Blendenelements 3l erreicht. Diese reellen Abbilder der Blendenelemente 3r und 3l sind wie in Fig. 1 als Bilder in einer Ebene 6 unmittelbar vor den Augen Aᵣ und Aₗ angedeutet.

Damit wird auch beim Ausführungsbeispiel von Fig. 2 ein Übersprechen der Bildinformation der in den beiden Bildflächen enthaltenen Bilder für das nicht gewünschte Auge verhindert und damit ein unbehindeter, reiner stereoskopischer Eindruck dem Betrachter vermittelt. Gegenüber Fig. 1 zeichnet sich das Ausführungsbeispiel von Fig. 2 durch eine deutlich verringerte Bautiefe aus.

Bei beiden Ausführungsbeispielen kann es sich bei den Kollimatorlinsen 5 um eine einzige oder um zwei Linsen handeln. Im letzteren Fall ergibt sich insofern ein Vorteil, als kürzere Brennweiten derartiger Linsen und damit eine geringere Baugröße möglich ist. Dadurch werden auch Korrekturen von Abbildungs- oder Linsenfehler leichter möglich.

Wie in Fig. 2 dargestellt, können zur Vereinheitlichung der konstruktiven Ausführung die Blendenelemente 3r und 3l einstückig mit dem Leuchtschirm 9 sein.

## Patentansprüche

1. Stereoskopisches Display-System zur dreidimensionalen Darstellung von Bildinformation in zwei durchleuchteten Bildflächen (4r, 4l) für einen Beobachter, der sich in einem vorbestimmten Abstand zum Display-System befindet, bestehend aus
einer sammelnden Austrittsoptik, (5r, 5l) an deren einer Seite in dem vorbestimmten Abstand der Ort der Augen (Ar, Al) des Beobachters vorgesehen ist, und an deren anderer Seite sich in der Brennebene der Austrittsoptik oder in der Nähe dieser Brennebene innerhalb der einfachen Brennweite die Bildflächen (4r, 4l) befinden,
und jeder Bildfläche zugeordneten Blendenelementen, (3r, 3l) die auf der anderen Seite der Austrittsoptik außerhalb deren einfacher Brennweite liegen, und die jeweils so angeordnet sind, daß ein Teil des die zugeordnete Bildfläche durchleuchtenden Lichts abgeschattet wird,
dadurch gekennzeichnet,
daß die Blendenelemente (3r, 3l) so angeordnet sind, daß sie durch die Austrittsoptik (5r, 5l) reell am Ort der Augen (Ar, Al) des Betrachters abgebildet werden und das jeweilige reelle Bild am Ort jenes Auges (Ar, Al) zu liegen kommt, welches für die Betrachtung jener Bildfläche (4r, 4l) vorgesehen ist, die diesem reell abgebildeten Blendenelement (3r, 3l) nicht zugeordnet ist.

2. System nach Anspruch 1, dadurch gekennzeichnet, daß die Austrittsoptik (5) zwei den Bildflächen (4r, 4l) individuell zugeordnete Sammellinsen (5r, 5l) enthält.

3. System nach Anspruch 1 oder 2, dadurch gekennzeichnet, daß die Bildflächen (4r, 4l) reelle Zwischenbilder von Bildern (1r, 1l) sind, die mittels einer Vorschaltoptik (2r, 2l) abgebildet sind.

4. System nach Anspruch 3, dadurch gekennzeichnet, daß die Blendenelemente (3r, 3l) und die Vorschaltoptik (2r, 2l) miteinander verbunden sind.

5. System nach Anspruch 1 oder 2, dadurch gekennzeichnet, daß die Bildflächen (1r, 1l) durch einen Lichtventilkörper gebildet sind, dem eine vor der jenseitigen Brennebene der Austrittsoptik gelegene Leuchtfläche (9) zugeordnet ist.

6. System nach Anspruch 5, dadurch gekennzeichnet, daß die Leuchtfläche (9) mit den Blendenelementen (3r, 3l) eine Einheit bildet.

## Claims

1. A stereoscopic display system for the three-dimensional representation of image information in two illuminated image faces (4r, 4l) for an observer who is situated at a predetermined distance from the display system, comprising a collecting outlet optical system (5r,5l) on one side of which, at the predetermined distance, the location of the eyes (Ar,Al) of the observer is arranged and, on the other side thereof, the image faces (4r,4l) are situated in the focal plane of the outlet optics or in the vicinity of this focal plane within the simple focal length,
and blind elements (3r,3l), associated with each image face, which lie on the other side of the outlet optics outside the simple focal length thereof and which, in each case, are arranged such that a portion of the light shining through the associated image face is shaded,
characterised in that
the blind elements (3r, 3l) are arranged such that they are represented real through the outlet optics (5r,5l) at the location of the eyes (Ar, Al) of the observer and the respective real image comes to lie at the location of that eye (Ar, Al) which is provided for the observation of that image face (4r, 4l) which is not associated with this aperture element (3r, 3l) which is depicted real.

2. A system according to Claim 1, characterised in that the outlet optics (5) include two converging lenses (5r, 5l) associated individually with the image faces (4r,4l).

3. A system according to Claim 1 or 2, characterised in that the image faces (4r, 4l) are real intermediate images of images (1r, 1l) which are represented by means of a series optical system (2r,2l).

4. A system according to Claim 3, characterised in that the blind elements (3r, 3l) and the series optical system (2r,2l) are connected with each other.

5. A system according to Claim 1 or 2, characterised in that the image faces (1r, 1l) are formed by a light valve body, with which an illuminated area (9) is associated and which is situated in front of the opposite focal plane of the outlet optics.

6. A system according to Claim 5, characterised in that the illuminated area (9) forms a unit with the aperture elements (3r, 3l).

## Revendications

1. Système d'affichage stéréoscopique pour la représentation tridimensionnelle d'informations images dans deux surfaces images transparentes (4r, 4l) pour un observateur qui se trouve à une distance prédéterminée du système d'affichage, comprenant :
- une optique de sortie, collectrice (5r, 5l) avec, d'un côté et à une distance prédéterminée, l'emplacement des yeux (Aᵣ, Aₗ) de l'observateur, et, de l'autre côté, les surfaces images (4r, 4l), dans le plan local de l'optique de sortie ou à proximité de ce plan local, à l'intérieur de la distance focale simple,
- et les éléments de diaphragme (3r, 3l) associés à chaque surface image, de l'autre côté de l'optique de sortie, au-delà de la simple distance focale et qui sont chaque fois disposés pour couper une partie de la lumière éclairant la surface image associée,
caractérisé en ce que
les éléments de diaphragme (3r, 3l) sont disposés pour que l'optique de sortie (5r, 5l) en donne une image réelle à l'emplacement des yeux (Aᵣ, Aₗ) de l'observateur et que l'image réelle respective se situe à l'emplacement de chaque oeil (Aᵣ, Aₗ) pour l'observation de cette surface image (Aᵣ, Aₗ) correspondante qui n'est pas associée à cet élément de diaphragme (3r, 3l) dont on a une image réelle.

2. Système selon la revendication 1, caractérisé en ce que l'optique de sortie (5) se compose de deux lentilles collectrices (5r, 5l) associées séparément aux surfaces images (4r, 4l).

3. Système selon la revendication 1 ou 2, caractérisé en ce que les surfaces images (4r, 4l) sont des images intermédiaires réelles des images (1r, 1l) formées à l'aide d'une optique d'entrée (2r, 2l).

4. Système selon la revendication 3, caractérisé en ce que l'élément de diaphragme (3r, 3l) et l'optique d'entrée (2r, 2l) sont reliés.

5. Système selon la revendication 1 ou 2, caractérisé en ce que les surfaces images (1r, 1l) sont formées par un obturateur optique auquel est associée une surface lumineuse (9) située devant le plan focal opposé de l'optique de sortie.

6. Système selon la revendication 5, caractérisé en ce que la surface lumineuse (9) ne constitue une seule pièce avec les éléments de diaphragme (3r, 3l).
